# DEMANDE DE BREVET EUROPEEN

(11) **EP 4 830 516 A1**
(43) Date de publication de la demande: **28.10.2026**
(21) Numéro de dépôt: 26172646.7
(22) Date de dépôt: 16.04.2026
(51) Int. Cl.: A01K 5/00

(54) **SYSTÈME D' ALIMENTATION D'UN VÉHICULE AGRICOLE AUTONOME ÉLECTRIQUE DESTINÉ À L' ALIMENTATION ANIMALE**

(30) Priorité: 17.04.2025 FR 2504137
(71) Demandeur: R.M.H France, 35190 Tinténiac (FR)
(72) Inventeur: LESOUEF, Nicolas, 35190 CARDROC (FR)
(74) Mandataire: Derriennic, Tangui Jean

(57) **Abrégé**

L'invention concerne un système d'alimentation d'un véhicule agricole autonome électrique destiné à l'alimentation animale, remarquable en ce que ledit véhicule autonome comprend un châssis sur lequel est fixé une cuve (20), un bras de chargement (21) d'aliments, un dispositif de distribution, un capteur pour la détermination de données, des roues et un module de batterie (22) fixé sur ledit châssis; ledit module de batterie (22) alimente ledit véhicule autonome ; un dispositif de remplacement d'un module de batterie (22) configuré pour échanger un autre module de batterie (22) chargé avec ledit module de batterie (22) du véhicule autonome ; lorsque le module de batterie (22) du véhicule autonome a atteint un seuil prédéterminé de décharge, ledit véhicule autonome se dirige vers le dispositif de remplacement de module de batterie (22).

## Description

### Domaine technique de l'invention

La présente invention concerne un système d'alimentation d'un véhicule agricole autonome électrique destiné à l'alimentation animale. Elle s'applique, en particulier, dans le domaine de l'agriculture et de l'alimentation animale.

### Technique antérieure

Les véhicules autonomes agricoles doivent relever plusieurs défis liés à leur autonomie énergétique et à leur efficacité en conditions réelles d'exploitation.

L'un des premiers leviers d'optimisation repose sur la réduction de la consommation électrique de chaque composant. Pour cela, il est pertinent de limiter la largeur des outils tels que les fraises, de retravailler la conception des vis de mélange pour diminuer leur temps de fonctionnement, et, de concevoir des machines les plus légères possibles.

Les méthodes automatiques d'alimentation agricole sont connues depuis des décennies pour diverses espèces d'animaux d'élevage, telles que les porcs et la volaille.

Dans le domaine de l'alimentation agricole, on connaît également des processus d'alimentation automatisés avec des mélangeuses, dans lesquels toutes les opérations, depuis le retrait des aliments des installations de stockage jusqu'à la préparation d'un mélange d'aliments prédéfini et la distribution des aliments dans une allée d'alimentation, sont effectuées de manière autonome.

L'autonomie des mélangeuses autonomes électriques reste aujourd'hui limitée par la capacité des batteries embarquées. Ces machines, conçues pour fonctionner sans intervention humaine, nécessitent une alimentation énergétique importante pour assurer leur bon fonctionnement tout au long d'un cycle de travail. La demande en puissance étant élevée, les batteries utilisées doivent être capables de délivrer une forte intensité, ce qui engendre plusieurs contraintes techniques.

On peut citer le document EP2950638 qui décrit un système d'alimentation animale faisant partie d'un véhicule autonome. Toutefois ce document, ne présente pas d'élément de refroidissement des batteries en cas de surchauffe, et l'échange de batterie se fait manuellement par un opérateur.

### Présentation de l'invention

La présente invention vise à remédier à ces inconvénients avec une approche totalement novatrice.

Un objectif de l'invention est de fournir un tel système, qui puisse être adaptée aisément à des systèmes existants.

Ces objectifs, ainsi que d'autres qui apparaîtront par la suite, sont atteints, à l'aide d'un système d'alimentation faisant partie d'un véhicule agricole autonome électrique destiné à l'alimentation animale, remarquable en ce que ledit véhicule autonome comprend :
- un châssis sur lequel est fixé une cuve, un dispositif de distribution d'aliments, un capteur pour la détermination de données, des roues et un module de batterie fixé sur ledit châssis ; ledit module de batterie alimente ledit véhicule autonome ;
- un dispositif de remplacement d'un module de batterie configuré pour échanger un autre module de batterie chargé avec ledit module de batterie du véhicule autonome ; le dispositif de module de batterie comporte, en outre, un circuit de refroidissement ;
lorsque le module de batterie du véhicule autonome a atteint un seuil prédéterminé de décharge, ledit véhicule autonome se dirige vers le dispositif de remplacement d'un module de batterie configuré pour être autonome, ledit module de remplacement comporte au moins l'un des éléments suivants : un élément de charge dudit module batterie, une autre module batterie configurée pour remplacer ledit module batterie du véhicule autonome.

La motorisation électrique du véhicule autonome agricole offre une excellente intégration avec les systèmes d'automatisation et de robotisation. Elle se distingue par un rendement énergétique élevé, une fiabilité accrue et une durée de vie prolongée. Grâce à sa conception simplifiée, elle permet de réduire significativement les temps et les coûts liés à l'entretien, tout en limitant le coût global d'utilisation.

Le module de batterie constitue la source d'énergie principale du véhicule. Son intégration sur le châssis permet non seulement un bon équilibre du poids/puissance du véhicule mais aussi une accessibilité facilitée pour les opérations de maintenance ou de remplacement.

Un des points clés de ce système est le dispositif de remplacement de batterie. Celui-ci est conçu pour permettre un échange rapide entre un module déchargé et un module chargé, sans intervention humaine. Ce mécanisme réduit considérablement les temps d'arrêt et garantit la continuité de fonctionnement du véhicule, même lors de longues périodes d'activité augmentant le temps de travail.

Enfin, grâce à l'intégration d'un seuil de décharge prédéfini, le véhicule est capable de détecter de manière autonome le moment opportun pour se rendre au point de remplacement. Cette gestion intelligente de l'énergie renforce l'autonomie du système tout en limitant les interruptions de service, ce qui est essentiel dans un environnement agricole automatisé.

Ce système offre également une flexibilité et une évolutivité notables. Le nombre de batteries interchangeables peut être ajusté en fonction des besoins spécifiques de l'exploitation, permettant d'adapter l'autonomie du véhicule selon la taille de l'exploitation ou le temps de fonctionnement requis. Cette modularité rend le système plus adaptable aux contraintes et aux évolutions des pratiques agricoles.

La batterie interchangeable peut être rechargée sur le véhicule de manière autonome dans le cas d'une utilisation restreinte des capacités de la machine.

L'invention est avantageusement mise en œuvre selon les modes de réalisation et les variantes exposées ci-après, lesquelles sont à considérer individuellement ou selon toute combinaison techniquement opérante.

Dans un mode de réalisation, le véhicule autonome comporte un microcontrôleur destiné à contrôler chaque action dudit véhicule autonome ; ledit microcontrôleur comporte une unité de traitement, et une unité de contrôle interprétant un environnement spatial autour du véhicule autonome à partir des données issues dudit capteur ; lesdites données sont un nuage de points tridimensionnel ; ledit microcontrôleur est configuré pour calculer un pourcentage de charge ou de décharge du module de batterie et est configuré pour diriger ledit véhicule autonome vers le dispositif de remplacement lorsque ledit pourcentage est compris entre 10 % et 50 %, de préférence entre 20 % et 40 %.

Grâce à ces dispositions, le véhicule se déplace de façon autonome sans l'intervention humaine.

Dans un mode de réalisation, le dispositif comporte, en outre, un bras de chargement s'étendant entre une première extrémité et une deuxième extrémité ; ladite deuxième extrémité étant distale du véhicule autonome et comportant une fraise de chargement ; ledit bras comporte un convoyeur à bande configuré pour amener des aliments vers la cuve ; ladite cuve comporte au moins une vis de mélange. Une trappe de sortie de la cuve amène les aliments vers le dispositif de distribution d'aliments ; le dispositif de distribution d'aliments comporte un convoyeur de distribution évacuant les aliments du véhicule autonome.

Dans un mode de réalisation, l'unité de traitement est reliée avec un contrôleur intégré avec le module de batterie ; ledit contrôleur recevant des signaux d'au moins l'un des éléments suivants : un capteur de tension, un capteur de courant, un capteur de température.

Dans un mode de réalisation, le dispositif de remplacement comporte un élément rotatif ou un élément de translation ayant un élément de déplacement d'un module de batterie. Selon une variante, il existe une combinaison de l'élément rotatif et de l'élément de translation.

Dans un mode de réalisation, lorsque ledit élément de déplacement récupère le module de batterie du véhicule, l'élément rotatif pivote, après le pivotement, l'élément de déplacement positionne un second module de batterie dans le véhicule autonome. Le second module de batterie correspond à un autre module de batterie.

Le module de batterie de la machine nécessitant une charge est déplacé vers un emplacement vide afin de libérer l'emplacement pour l'introduction d'un module batterie chargé.

Grâce à ces dispositions, ce dispositif assure un échange rapide et autonome, limitant les interruptions de fonctionnement et garantissant la continuité énergétique du véhicule sans intervention humaine.

Dans un mode de réalisation, le dispositif de remplacement comporte un rail de guidage amenant le véhicule autonome vers une position configurée pour le remplacement du module de batterie.

Grâce à ces dispositions, le rail de guidage permet de guider le véhicule autonome lorsque celui-ci doit changer de module de batterie.

Dans un mode de réalisation, le dispositif de module de batterie comporte, en outre, un circuit de refroidissement.

Grâce à ces dispositions, le circuit de refroidissement permet de contrôler la température du module de batterie et ainsi éviter les éventuelles surchauffes.

Dans un mode de réalisation, le module de batterie comporte un châssis de module de batterie.

Ainsi, le châssis du module de batterie assure la protection du module batterie contre les chocs.

### Brève description des figures

D'autres avantages, buts et caractéristiques de la présente invention ressortent de la description qui suit, faite dans un but explicatif et nullement limitatif, en regard des dessins annexés, dans lesquels :
la figure 1 représente une vue isométrique d'un système d'alimentation d'un véhicule agricole autonome électrique ;
la figure 2 représente une vue isométrique d'un module de batterie ;
la figure 3 représente un exemple de dispositif de remplacement ;
la figure 4 représente un procédé de changement de batterie d'un véhicule autonome.

### Description des modes de réalisation

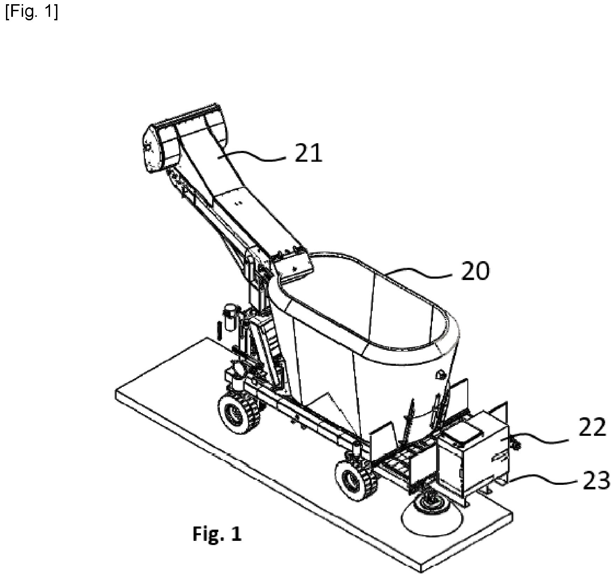

La figure 1 montre une vue isométrique d'un système d'alimentation d'un véhicule agricole autonome électrique.

Ce système est destiné à l'alimentation agricole.

Le véhicule autonome comprend une longueur et une largeur.

Le véhicule autonome comporte une cuve 20, un bras de chargement 21 d'aliment, un dispositif de distribution, des roues et un module de batterie 22.

Selon un exemple de réalisation, la cuve 20 comporte une forme oblongue ou une forme circulaire.

La cuve 20 comporte au moins une vis de mélange positionnée à l'intérieur de la cuve 20.

Cette cuve 20 comporte un volume compris entre 1 m³ et 20 m³. Selon un exemple de cuve 20, le volume est de 6 m³.

Le bras de chargement 21 s'étend entre une première extrémité et une deuxième extrémité.

La deuxième extrémité est distale du véhicule autonome et comporte une fraise de chargement configurée pour creuser puis récolter un aliment souhaité.

Le bras de chargement 21 comporte un convoyeur amenant des aliments vers la cuve 20.

Ce convoyeur déverse les aliments dans la cuve 20.

Le bras de chargement 21 comporte une longueur comprise entre 2,3 m et 4,3 m.

Selon une variante, la longueur est de 2,6 m.

La fraise de chargement comporte un diamètre compris entre 0,3 m et 1 m.

Selon une variante, le diamètre est de 0,6 m.

Le bras de chargement 21 comporte une liaison pivot avec la cuve 20.

Cette liaison pivot comporte un axe longitudinal selon un plan vertical.

La liaison pivot permet le levage ou la descente du bras de chargement 21 selon un angle de rotation.

Lors de l'utilisation du bras, l'angle de rotation varie entre 40° et 100° selon l'axe longitudinal.

La cuve 20 comporte une trappe de sortie de la cuve 20 positionnée sur l'un des côtés ou sur l'une des extrémités de la cuve 20.

Cette trappe de sortie de la cuve 20 libère les aliments sur un dispositif de distribution amenant les aliments sur un sol.

Le dispositif de distribution d'aliments est positionné entre la cuve 20 et le module de batterie 22.

Ce dispositif de distribution d'aliments comporte un convoyeur de distribution évacuant les aliments du véhicule autonome.

Selon un exemple, le convoyeur se déplace selon la largeur du véhicule autonome.

Le module de batterie 22 alimente le véhicule autonome.

Selon un exemple, le système comporte une plateforme 23 sur laquelle est disposé le module de batterie 22, et, permet une connexion et déconnexion du module de batterie 22.

Le système comporte un dispositif de remplacement d'un module de batterie 22. Ce dispositif permet d'échanger un module de batterie 22 chargé avec le module de batterie 22 du véhicule autonome.

Lorsque le module batterie du véhicule autonome atteint un seuil prédéterminé de décharge, ledit véhicule autonome se dirige vers le dispositif de remplacement d'un module de batterie 22 configuré pour être autonome.

Le véhicule fonctionne sans intervention humaine directe, en prenant seul certaines décisions ou en exécutant automatiquement les actions nécessaires à sa mission.

Selon un exemple de réalisation, le module de batterie 22 contient au moins six batteries.

Selon un exemple de réalisation, trois batteries sont rangées en montage en série, et deux batteries sont rangées en montage en parallèle.

Le module de batterie comporte une tension comprise entre 40 volts et 800 volts. Selon une variante, la tension est de 96 volts.

Le module de batterie comporte une puissance comprise entre 35 kW et 55 kW. Selon une variante, la puissance est de 48 kW.

Le véhicule autonome comporte un microcontrôleur.

Un microcontrôleur est un petit ordinateur intégré dans une seule puce, conçu pour gérer des tâches spécifiques.

Ce microcontrôleur est destiné à contrôler chaque action dudit véhicule autonome.

Le microcontrôleur comporte une unité de traitement et une unité de contrôle.

L'unité de contrôle interprète un environnement autour du véhicule autonome à partir des données issues du capteur. Cela permet d'assurer le déplacement du véhicule autonome en évitant les potentiels obstacles.

Les données sont un nuage de points tridimensionnel comportant des points individuels.

Selon un exemple, les données sont configurées pour être représentées sur une carte en deux dimensions.

La position de chaque point individuel est définie par une coordonnée de point et le nuage de points dans son ensemble. Cette définition est utilisée pour refléter l'environnement spatial autour du véhicule autonome.

Lors de la détection du seuil prédéterminé de décharge par l'unité de traitement, l'unité de contrôle coordonne le véhicule autonome pour le déplacer jusqu'au dispositif de remplacement.

Cette manipulation permet de limiter l'intervention humaine sur le véhicule autonome.

L'unité de traitement est reliée avec un contrôleur intégré avec le module de batterie 22.

Le contrôleur vérifie et gère les paramètres de la recharge lors de la connexion avec le chargeur sur la machine dans le cas d'une recharge simple ou sur le chargeur lors de l'échange du module de batterie.

Le contrôleur joue également le rôle d'un dispositif électronique utilisé pour surveiller en temps réel l'état et les performances d'une batterie. Il mesure plusieurs paramètres essentiels tels que la tension, le courant, la température, ainsi que l'état de charge (SoC) et l'état de santé (SoH) de la batterie.

Selon une variante, il existe un capteur relié au contrôleur.

L'acronyme SoH est un terme anglais signifiant « State of Health » ou « état de santé » en français. Il indique dans quel état général se trouve la batterie par rapport à sa capacité d'origine.

L'acronyme SoC est un terme anglais signifiant « State of Charge » ou « état de charge » en français. Il montre le niveau de charge actuel du module batterie en temp réel.

Selon un exemple, le contrôleur reçoit des signaux d'au moins l'un des éléments suivants : un capteur de tension, un capteur de courant, un capteur de température.

Le contrôleur contrôle plusieurs autres paramètres.

Ces paramètres sont : le contrôle de l'uniformité de charge des modules, le contrôle de chaque température des modules, le contrôle de la charge et décharge de chaque module, et la gestion des relais de puissance.

Ces informations permettent de garantir un fonctionnement optimal, une meilleure gestion de l'énergie, et d'éviter les pannes ou les surcharges.

Le microcontrôleur est configuré pour calculer un pourcentage de charge ou de décharge du module de batterie 22.

Selon un exemple de réalisation, le seuil prédéterminé de décharge est atteint dès lors que le contrôleur détecte un pourcentage compris entre 10 % et 50 %, de préférence entre 20 % et 40 %.

Selon la distance entre le véhicule autonome et le dispositif de remplacement, le seuil prédéterminé de décharge est différent. Cela permet d'anticiper les déplacements aller-retour du véhicule autonome.

Le véhicule autonome comporte un capteur pour la détermination de données. Cela permet de détecter les éventuels obstacles et de communiquer des informations sur l'environnement spatial autour du véhicule autonome.

Ce capteur pour la détermination de données envoie plusieurs informations à l'unité de contrôle configurant l'environnement spatial.

Selon un exemple de capteur, le capteur pour la détermination de données est au moins l'un des éléments suivants : un capteur LIDAR 3D (marque déposée), une antenne RTK, un capteur odométrique.

Lors du déplacement, le véhicule roule à une vitesse comprise entre 0 km/h et 10 km/h. Selon une variante, la vitesse est de 7km/h.

Selon une variante, le véhicule autonome se déplace pour aller au dispositif de remplacement de module de batterie et celui-ci comporte un élément de charge du module batterie sur le véhicule autonome (sans le remplacer, juste en le chargeant).

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

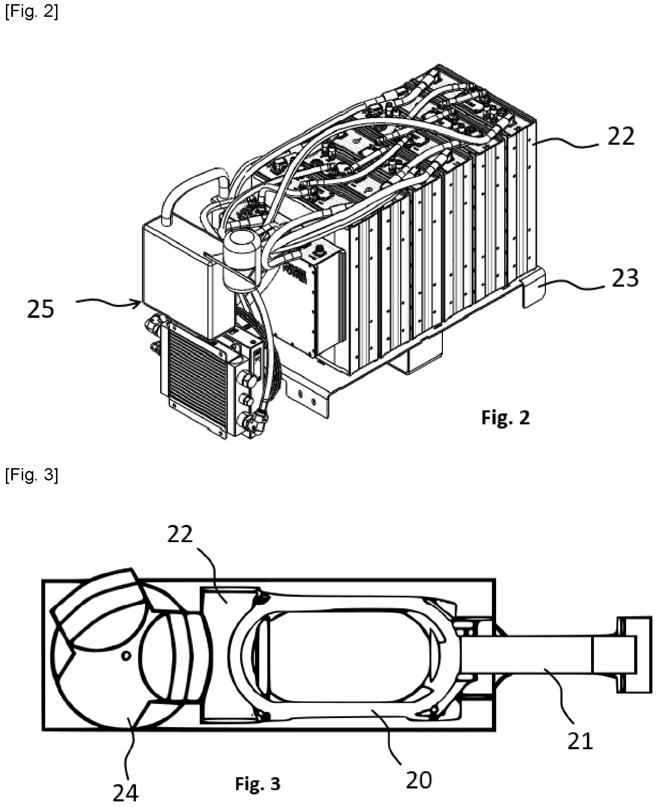

La figure 2 montre une vue isométrique d'un module de batterie.

Cette figure comporte des caractéristiques similaires à celle de la figure précédente, notamment concernant le module de batterie.

Le module de batterie 22 comporte un premier côté et un deuxième côté.

Le premier côté comporte une partie de la plateforme 23. Cette partie de la plateforme 23 servant de protection.

Le deuxième côté est disposé sur le côté opposé au premier côté.

Ce module de batterie 22 comporte un circuit de refroidissement 25 positionné sur le deuxième côté.

Selon un exemple de réalisation, lorsque le contrôleur détecte une surchauffe du module de batterie 22, l'unité de traitement envoie l'information au microcontrôleur interagissant avec le circuit de refroidissement 25 pour diminuer la température du module de batterie 22.

L'unité de traitement comporte une gestion de commande de la puissance du module de batterie 22. Cette gestion est externe au module de batterie 22 afin d'assurer une sécurité.

La plateforme 23 du module de batterie 22 assure l'isolation et la protection contre les chocs.

Pour assurer l'activation des modules de batterie, une tension doit être portée pour actionner des relais de puissance situés sur chaque module de batterie 22.

La tension de cette commande est déportée dans une seconde batterie située en dehors du module batterie.

Cette seconde batterie est fixée sur le châssis.

La figure 3 montre un exemple de dispositif de remplacement.

Cette figure comporte des caractéristiques similaires à celle des figures précédentes, notamment concernant le dispositif de remplacement.

Cette figure comporte également une cuve 20 et un bras de chargement 21.

Le dispositif de remplacement comporte un élément rotatif 24 ou un élément de translation et un élément de déplacement.

Cet élément rotatif 24 est composé de plusieurs logements pour module de batterie 22.

Selon un exemple, l'élément rotatif 24 est un plateau rotatif.

L'élément rotatif 24 comporte un logement vide recevant le module de batterie 22 du véhicule autonome, un logement chargeant un module de batterie 22, un logement de recharge ou de stockage.

Lorsque l'élément rotatif 24 pivote, l'élément de déplacement échange le module de batterie 22 du véhicule autonome avec un module de batterie 22 chargé provenant d'un des logements.

Après le pivotement, l'élément de déplacement positionne un second module batterie dans le véhicule autonome.

Selon une variante, l'élément de déplacement est un bras télescopique ou un bras de translation.

Le dispositif de remplacement comporte un rail de guidage.

Ce rail de guidage amène le véhicule autonome vers une position configurée pour le remplacement du module de batterie 22.

La position de remplacement correspond à une position proximale de l'élément rotatif 24. Cela assure son déplacement.

Le rail de guidage est détecté par le capteur pour la détermination de données lorsque le véhicule autonome est proximal du dispositif de remplacement.

Le capteur pour la détermination de données envoie une information du rail de guidage à l'unité de contrôle configurant l'environnement spatial.

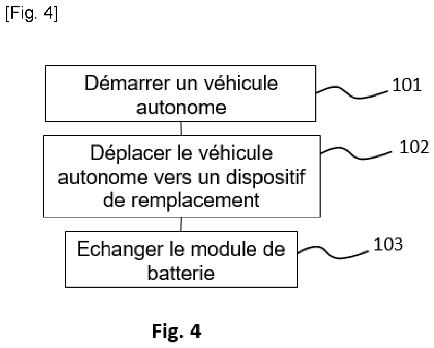

La figure 4 montre un procédé de changement de batterie d'un véhicule autonome.

L'étape 101 correspond au démarrage du véhicule autonome par un module de batterie.

Le véhicule autonome comporte un châssis sur lequel est fixé une cuve, un bras de chargement d'aliments, un dispositif de distribution, un capteur pour la détermination de données, des roues, et, un module de batterie posé sur une plateforme.

Après l'étape 101, il y a une sous-étape de ramassage des aliments par la fraise de chargement.

L'étape 102 correspond au déplacement du véhicule autonome vers un dispositif de remplacement.

Le déplacement se fait avec un microcontrôleur destiné à contrôler chaque action dudit véhicule autonome.

Le microcontrôleur comporte une unité de traitement et une unité de contrôle interprétant un environnement spatial autour du véhicule autonome à partir des données issues dudit capteur.

L'étape 103 correspond à l'échange de module de batterie avec le dispositif de remplacement.

Le dispositif de remplacement comporte un élément rotatif ayant un élément de déplacement d'un module de batterie.

L'élément de déplacement récupère le module de batterie du véhicule, l'élément rotatif pivote, après le pivotement, l'élément de déplacement positionne un second module batterie dans le véhicule autonome.

Il est souligné que toutes les caractéristiques, telles qu'elles se dégagent pour un homme du métier à partir de la présente description, des dessins et des caractéristiques attachées, même si concrètement elles n'ont été décrites qu'en relation avec d'autres caractéristiques déterminées, tant individuellement que dans des combinaisons quelconques, peuvent être combinées à d'autres caractéristiques ou groupes de caractéristiques divulguées ici, pour autant que cela n'ait pas été expressément exclu ou que des circonstances techniques ne rendent de telles combinaisons impossibles ou dénuées de sens.

### LISTE DES SIGNES DE RÉFÉRENCE

**[Table 1]**

| Références | Désignations |
|---|---|
| 20 | Cuve |
| 21 | Bras de chargement |
| 22 | Module de batterie |
| 23 | Plateforme |
| 24 | Elément rotatif |
| 25 | Circuit de refroidissement |

## Revendications

1. Système d'alimentation faisant partie d'un véhicule agricole autonome électrique destiné à l'alimentation animale, **caractérisé en ce que** ledit véhicule autonome comprend :
- un châssis sur lequel est fixé une cuve (20), un dispositif de distribution d'aliments, un capteur pour la détermination de données, des roues et un module de batterie (22) fixé sur ledit châssis ; ledit module de batterie (22) alimente ledit véhicule autonome ;
- un dispositif de remplacement d'un module de batterie (22) configuré pour échanger un autre module de batterie (22) chargé avec ledit module de batterie (22) du véhicule autonome ; le dispositif de module de batterie (22) comporte, en outre, un circuit de refroidissement (25) ;
lorsque le module de batterie (22) du véhicule autonome a atteint un seuil prédéterminé de décharge, ledit véhicule autonome se dirige vers le dispositif de remplacement d'un module de batterie (22) configuré pour être autonome, ledit module de remplacement comporte au moins l'un des éléments suivants : un élément de charge dudit module batterie, une autre module batterie configurée pour remplacer ledit module batterie du véhicule autonome.

2. Système selon la revendication 1, dans lequel le véhicule autonome comporte un microcontrôleur destiné à contrôler chaque action dudit véhicule autonome ; ledit microcontrôleur comporte une unité de traitement, et une unité de contrôle interprétant un environnement spatial autour du véhicule autonome à partir des données issues dudit capteur ; lesdites données sont un nuage de points tridimensionnel ; ledit microcontrôleur est configuré pour calculer un pourcentage de charge ou de décharge du module de batterie (22) et est configuré pour diriger ledit véhicule autonome vers le dispositif de remplacement lorsque ledit pourcentage est compris entre 10 % et 50 %, de préférence entre 20 % et 40 %.

3. Système selon la revendication 1, dans lequel le véhicule autonome comporte, en outre, un bras de chargement (21) s'étendant entre une première extrémité et une deuxième extrémité ; ladite deuxième extrémité étant distale du véhicule autonome et comportant une fraise de chargement ; ledit bras comporte un convoyeur à bande configuré pour amener des aliments vers la cuve (20) ;ladite cuve (20) comporte au moins une vis de mélange ; une trappe de sortie de la cuve (20) libère les aliments vers le dispositif de distribution d'aliments ; le dispositif de distribution d'aliments comporte un convoyeur de distribution évacuant les aliments du véhicule autonome.

4. Système selon la revendication 2, dans laquelle l'unité de traitement est reliée avec un contrôleur intégré avec le module de batterie (22) ; ledit contrôleur recevant des signaux d'au moins l'un des éléments suivants : un capteur de tension, un capteur de courant, un capteur de température.

5. Système selon la revendication 1, dans lequel le dispositif de remplacement comporte un élément rotatif (24) ou un élément de translation ayant un élément de déplacement d'un module de batterie (22).

6. Système selon la revendication 5, dans lequel l'élément rotatif (24) pivote lorsque ledit élément de déplacement récupère le module de batterie (22) du véhicule, après le pivotement, l'élément de déplacement positionne un second module de batterie dans le véhicule autonome.

7. Système selon la revendication 1, dans lequel le dispositif de remplacement comporte un rail de guidage configuré pour amener le véhicule autonome vers une position configurée pour le remplacement du module de batterie (22).

8. Système selon la revendication 1, dans lequel le module de batterie (22) comporte un châssis de module de batterie.
